**Europäisches Patentamt**

**European Patent Office**

**Office européen des brevets**

(19)

(11) Veröffentlichungsnummer: **0 436 961 A2**

## (12) EUROPÄISCHE PATENTANMELDUNG

(21) Anmeldenummer: **90125801.2**

(22) Anmeldetag: **29.12.90**

(51) Int. Cl.⁵: **G06F 15/02**

(30) Priorität: **10.01.90 DE 9000197 U**

(43) Veröffentlichungstag der Anmeldung:
**17.07.91 Patentblatt 91/29**

(84) Benannte Vertragsstaaten:
**BE CH DE FR GB IT LI NL SE**

(71) Anmelder: **Lawrenz, Wolfhard, Prof. Dr.-Ing.**
**Waldweg 1**
**W-3340 Wolfenbüttel(DE)**

(72) Erfinder: **Lawrenz, Wolfhard, Prof. Dr.-Ing.**
**Waldweg 1**
**W-3340 Wolfenbüttel(DE)**

(74) Vertreter: **Lins, Edgar, Dipl.-Phys. et al**
**Patentanwälte Gramm + Lins**
**Theodor-Heuss-Strasse 2**
**W-3300 Braunschweig(DE)**

(54) **Datenverarbeitungsgerät.**

(57) Ein spezielles für Analysier-, Test- und Steuerungszwecke einsetzbares Datenverarbeitungsgerät bestehend aus
- einem Gehäuse mit
  - einem LCD-Display mit einer geringen Anzahl von Zeichenzeilen
  - einer Tastatur mit Cursortasten, Plus-, Minus-und Enter-Tasten und Funktionstasten mit festen sowie programmierbaren Funktionen und

- einer inneren Struktur, gebildet durch
  - einen Mikroprozessor
  - einen fest programmierten Speicher
  - einen Schreib-Lese-Speicher
  - wenigstens eine Schnittstelle für einen externen Anschluß und
  - einen parallelen Bus, an den alle Bausteine der inneren Struktur angeschlossen sind.

Fig.1

## DATENVERARBEITUNGSGERÄT

Die Erfindung betrifft ein Datenverarbeitungsgerät.

Bekanntlich werden Datenverarbeitungsgeräte für eine Vielzahl von Anwendungsfällen benutzt. Die am meisten verbreiteten Datenverarbeitungsgeräte sind Personalcomputer, die mit einer zentralen Rechnereinheit, diversen Schnittstellen, Programmspeichern, Datenspeichern und Massenspeichern sowie äußerlich mit einem Monitor und einer üblichen PC-Tastatur ausgestattet sind. Derartige Personalcomputer sind weitgehend universell anwendbar, bedürfen aber einer festen Installation.

Es sind tragbare Geräte auf der Basis von Personalcomputern entwickelt worden und werden als sogenannte "Laptops" vertrieben. Die Größe dieser Geräte, die mit einem LCD-Bildschirm ausgestattet sind, wird im wesentlichen durch die übliche Größe einer PC-Tastatur bestimmt, an die der Bildschirm angepaßt ist. Die Geräte sind für viele Zwecke noch zu unhandlich und zu teuer.

Es sind ferner sogenannte Pocket-Computer bekannt, deren Tastatur im wesentlichen einer üblichen PC-Tastatur angeglichen ist und ein kleines Display mit einer geringen Zeilenanzahl für übliche Zeichen aufweist. Solche Pocket-Computer sind allerdings nur für wenige Anwendungsfälle unproblematisch einsetzbar. Für speziellere Anwendungen müssen Zusatzeinrichtungen verwendet werden, wie sie beispielsweise in dem deutschen Gebrauchsmuster 89 01 252 beschrieben sind. Die Kombination eines Pocket-Computers mit Zusatzeinrichtungen ist nicht unproblematisch. Um ein einheitliches, leicht handzuhabendes Gerät zur Verfügung zu haben, muß für die Zusatzeinrichtung ein Gehäuse erstellt werden, in das der Pocket-Computer integrierbar ist. Dadurch wird die Handlichkeit reduziert. Darüber hinaus können Aufladungsprobleme auftreten, die wiederum besondere Maßnahmen erforderlich machen.

Der Erfindung liegt somit die Problemstellung zugrunde, daß ein gut handhabbares für Analysier-, Test- und Steuerungszwecke einsetzbare Datenverarbeitungsgerät nicht zur Verfügung steht.

Ausgehend von dieser Problemstellung besteht das erfindungsgemäße Datenverarbeitungsgerät aus

- einem Gehäuse mit
  - einem LCD-Display mit einer geringen Anzahl von Zeichenzeilen
  - einer Tastatur mit Cursortasten, Plus-, Minus- und Enter-Tasten und Funktionstasten mit festen sowie programmierbaren Funktionen und
  - einer inneren Struktur, gebildet durch
    - einen Mikroprozessor
    - einen fest programmierten Speicher
    - einen Schreib-Lese-Speicher
    - wenigstens eine Schnittstelle für einen externen Anschluß und
    - einen parallelen Bus, an den alle Bausteine der inneren Struktur angeschlossen sind.

Das erfindungsgemäße Datenverarbeitungsgerät weist eine innere Struktur auf, die in ihrer hardwaremäßigen Ausgestaltung an sich bekannt ist. Sie vereint einen minimalen Aufwand mit einer hohen Flexibilität für viele Anwendungsfälle. Durch die Verwendung eines von Pocket-Computern her an sich bekannten LCD-Displays mit einer geringen Anzahl von Zeichenzeilen und einer extrem reduzierten, aber funktionalen Tastatur ist es möglich, ein extrem kleines und handliches Datenverarbeitungsgerät zu erstellen, für das sich eine Vielzahl von Anwendungsmöglichkeiten ergeben. Das Gerät kann beispielsweise mit einer Schnittstelle für einen Anschluß an ein Netzwerk ausgestattet sein und als Emulator fungieren, der an ein vorhandenes Netzwerk anschließbar ist und das Aussenden von Botschaften und/oder den Empfang von Botschaften des Netzes ermöglicht. Das erfindungsgemäße Datenverarbeitungsgerät kann aber auch in einfacher Weise für Steuerungen, Fernbedienungen, Tests und Diagnosen von Systemen u.s.w. eingesetzt werden.

Weitere Erläuterungen der Erfindung, vorteilhafte Ausführungsformen und Vorteile ergeben sich aus der nachstehenden Beschreibung von in der Zeichnung dargestellten Ausführungsbeispielen.

Es zeigen:

Figur 1 -    eine schematische Darstellung des Aufbaus eines erfindungsgemäßen Datenverarbeitungsgeräts

Figur 2 -    eine schematische Darstellung einer Erweiterung durch eine Zusatzkarte

Figur 3 -    eine schematische Darstellung einer Verbindung des erfindungsgemäßen Datenverarbeitungsgerätes mit einem Personalcomputer.

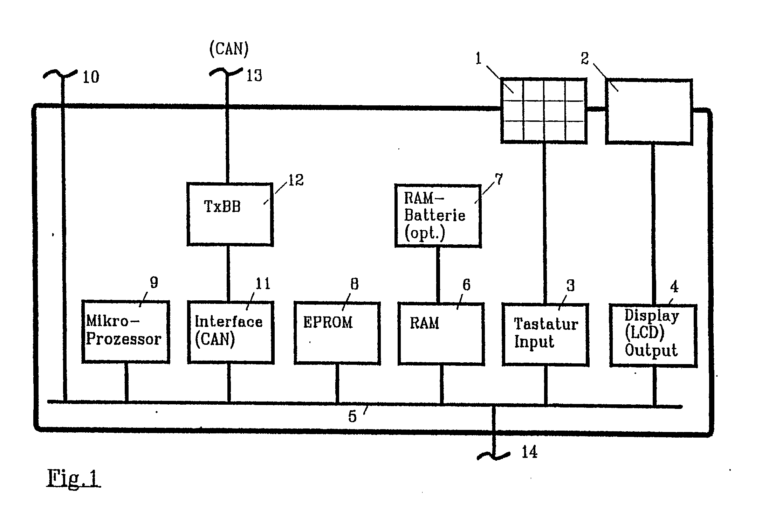

Das in Figur 1 schematisch dargestellte Datenverarbeitungsgerät ist als Netzwerk-Prüfgerät verwendbar. Es weist eine Tastatur 1 und ein Display 2 auf, über die eine Kommunikation mit der inneren Struktur möglich ist. Die Tastatur besteht aus zwölf Tasten, von denen vier übliche Cursortasten, drei Tasten " + ", "-" und "Enter" und fünf Tasten Funktionstasten sind. Von den Funktionstasten kann eine als "Help"-Taste fest programmiert sein und die anderen vier frei programmierbar sein (F1 bis F4). Im Rahmen eines angestrebten handlichen Geräts ist auch eine 16-Tasten-Tastatur gut einsetzbar, in der vier weitere Funktionstasten vorgesehen sein können.

Das Display 2 besteht vorzugsweise aus vier Zeilen à 16 Zeichen.

Tastatur 1 und Display 2 sind über jeweils eine Koppelschaltung 3, 4 mit einem parallelen Datenbus 5 verbunden. An den parallelen Datenbus sind ferner ein Schreib-Lese-Speicher 6, gegebenenfalls mit einer eigenen Batteriespannungsversorgung 7, ein fest programmierter Programmspeicher 8 und ein Mikroprozessor 9 angeschlossen. Über den Datenbus 5 ist ferner der Anschluß für eine externe Spannungsquelle 10 vorgesehen.

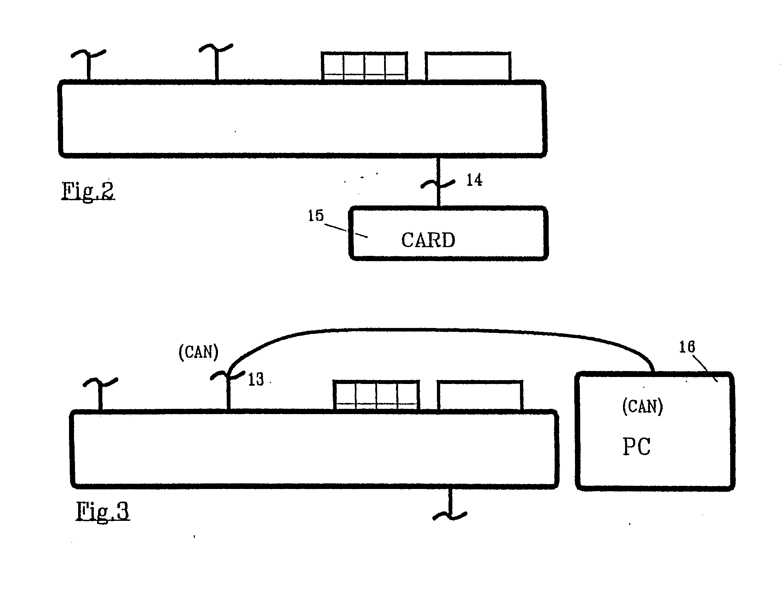

An den Datenbus 5 ist ein Interface 11 mit einem Tranceiver Baby Board 12 angeschlossen, mit dem mit einem Netzwerk 13, beispielsweise einem CAN-Netzwerk, kommuniziert werden kann. Der Datenbus 5 weist ferner eine Erweiterungsschnittstelle 14 auf, über die das erfindungsgemäße Datenverarbeitungsgerät in seinen Funktionen erweiterbar ist, wie anhand der Figuren 2 und 3 noch beschrieben werden wird. Gegebenenfalls kann die Stromversorgung des Datenverarbeitungsgerätes auch über die Schnittstelle 11 für das Netzwerk 13 erfolgen.

In der dargestellten Ausführungsform ist das erfindungsgemäße Datenverarbeitungsgerät beispielsweise als Emulator oder Analysator für ein CAN-Netzwerk 13 verwendbar. Über die Tastatur 1 können Botschaften für das CAN-Netzwerk 13 formuliert und durch den Mikroprozessor 9 gesteuert über das Interface 11 und das Tranceiver Baby Board 12 ausgesandt werden. In analoger Weise können Empfangsstellen spezifiziert und die im Netzwerk 13 für diese Empfangsstellen vorgesehenen Botschaften empfangen und beispielsweise auf dem Display 2 dargestellt werden.

Über entsprechende Sendebotschaften können Aktionen in einem angeschlossenen Netzwerk ausgelöst werden. Dadurch ist der Anwender beispielsweise in der Lage, über das Aufsetzen einer entsprechenden Sendebotschaft mit Hilfe der Tastatur 1 in einem PKW Gas zu geben. Setzt er eine entsprechende Empfangsbotschaft auf, die die Daten der Drosselklappe eines Motors aufnehmen (Empfangsstelle), so kann er prüfen, ob die entsprechenden Positionen des Gaspedals auch in Drosselklappenwinkeländerungen übersetzt werden. Damit ist das erfindungsgemäße Datenverarbeitungsgerät in Verbindung mit geeigneten Programmierungen für Test- und Diagnosezwecke der Funktion vernetzter Systeme einsetzbar.

Dieser Emulator ist nur beschränkt echtzeitfähig. Die Beschränkung bezieht sich auf die Reaktionszeit, die der Mensch als Bediener des Systems hat. In einer Automatikfunktion können jedoch auch ganze Sequenzen von automatischen Botschaftsaussendungen definiert werden. Gegebenenfalls wird das Gerät mit entsprechenden Erweiterungen versehen.

Andere Funktionen, wie beispielsweise die o.g. Tests und Diagnosefunktionen für vernetzte Systeme, kann das Gerät durch andere EPROMs, also fest programmierte Speicher 8, ausführen. Es ist aber auch möglich, das System über Software zu verändern. Das entsprechende Nachladen von Programmen kann über eine anschließbare Karte 15 erfolgen, die an die Erweiterungsschnittstelle 14 angeschlossen ist. Auf diese Weise lassen sich Daten und Programme und gegebenenfalls Zugangsberechtigungen in den programmierbaren Speicher 6 laden.

Eine variable Möglichkeit zur Veränderung der Funktion des erfindungsgemäßen Datenverarbeitungsgerätes ist in Figur 3 dargestellt. Über die Schnittstelle 11 für das Netzwerk 13 ist das erfindungsgemäße Gerät mit einem PC 16 verbunden, mit dem Daten und Programme in das Gerät hinein- bzw. Daten aus dem Gerät herausgeladen werden können. Im letzteren Falle können die Daten in dem PC 16 ausgewertet werden. Der gegebenenfalls batteriegepufferte Speicher 6 übernimmt in dem Gerät dann die Funktion des Programmspeichers, der zusammen mit dem Basic-Operating-System des EPROM 8 veränderte Funktionen des Mikroprozessors 9 bewirkt. Durch diese Verbindung kann das erfindungsgemäße Datenverarbeitungsgerät außerordentlich flexibel eingesetzt werden. Es kann für spezielle Anwendungsfälle flexibel programmiert und dann als leichtes und gut handhabbares, transportables Gerät für die speziellen Anwendungsfälle verwendet werden. Sowohl das Herunter- bzw. Heraufladen als auch die Anwendung in dem speziellen Anwendungsfall lassen sich mit der erfindungsgemäßen kleinen Tastatur 1 und dem kleinen Display 2 ohne Probleme durchführen.

## Patentansprüche

1. Datenverarbeitungsgerät bestehend aus
   - einem Gehäuse mit
     - einem LCD-Display mit einer geringen Anzahl von Zeichenzeilen
     - einer Tastatur mit Cursortasten, Plus-, Minus- und Enter-Tasten und Funktionstasten mit festen sowie programmierbaren Funktionen und
     - einer inneren Struktur, gebildet durch
       - einen Mikroprozessor
       - einen fest programmierten Speicher
       - einen Schreib-Lese-Speicher
       - wenigstens eine Schnittstelle für einen externen Anschluß und

- einen parallelen Bus, an den alle Bausteine der inneren Struktur angeschlossen sind.

2. Datenverarbeitungsgerät nach Anspruch 1 mit einer Schnittstelle (11) für einen Anschluß an ein Netzwerk (13) und mit einer Platine (12) für die Erstellung von Botschaften zur Kommunikation mit dem Netzwerk (13).

3. Datenverarbeitungsgerät nach Anspruch 1 oder 2 mit einer Erweiterungsschnittstelle (14).

4. Datenverarbeitungsgerät nach Anspruch 3 mit einer an die Erweiterungsschnittstelle (14) angeschlossenen Erweiterungskarte (15).

5. Datenverarbeitungsgerät nach Anspruch 3 mit einem an die Schnittstelle (11) für das Netzwerk (13) oder an die Erweiterungsschnittstelle (14) angeschlossenen Personalcomputer (16).

EP 0 436 961 A2

(CAN)

10    13

12

TxBB

RAM—
Batterie
(opt.)

1    2

7

9    11    8    6    3    4

| Mikro-Prozessor | Interface (CAN) | EPROM | RAM | Tastatur Input | Display (LCD) Output |

5

14

Fig.1

Fig.2

Fig.3